(19) Europäisches Patentamt
European Patent Office
Office européen des brevets

(11) **EP 3 779 504 A1**

(12) **EUROPEAN PATENT APPLICATION**
published in accordance with Art. 153(4) EPC

(43) Date of publication:
**17.02.2021 Bulletin 2021/07**

(21) Application number: **19811903.4**

(22) Date of filing: **27.03.2019**

(51) Int Cl.:
*G01S 7/497* (2006.01)       *G01B 11/00* (2006.01)

(86) International application number:
**PCT/JP2019/013295**

(87) International publication number:
**WO 2019/230171 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2018 JP 2018101661**

(71) Applicant: **Mitsubishi Electric Corporation**
**Tokyo 100-8310 (JP)**

(72) Inventors:
• **SUZUKI, Ryoga**
  **Tokyo 100-8310 (JP)**

• **MAEHARA, Hideaki**
  **Tokyo 100-8310 (JP)**
• **HINO, Momoyo**
  **Tokyo 100-8310 (JP)**
• **TAIRA, Kenji**
  **Tokyo 102-0073 (JP)**
• **KATO, Sumio**
  **Tokyo 102-0073 (JP)**

(74) Representative: **Pfenning, Meinig & Partner mbB**
**Patent- und Rechtsanwälte**
**Joachimsthaler Straße 10-12**
**10719 Berlin (DE)**

(54) **LASER CALIBRATION DEVICE, CALIBRATION METHOD THEREFOR, AND IMAGE INPUT DEVICE INCLUDING LASER CALIBRATION DEVICE**

(57) Laser calibration pattern displaying means (102) outputs laser irradiation location identifying pattern information for displaying a laser irradiation location identifying pattern (20) from a laser measuring device (1) to a display screen of a display (4). Laser irradiation location identifying means (103) receives reflection intensity value information including reflection intensity values of laser light, and determines a laser irradiation location on the display screen (41) of the display (4) on the basis of the reflection intensity values included in the reflection intensity value information, the reflection intensity value information being outputted from the laser measuring device (1) having received the laser light emitted from the laser measuring device (1) and reflected from the laser irradiation location identifying pattern (20) displayed on the display screen (41) of the display (4). Camera calibration pattern displaying means (101) outputs camera calibration pattern information for displaying a camera calibration pattern (10) on the display screen (41) of the display (4). Positional relationship computing means (104) computes a positional relationship between the laser measuring device (1) and a camera (2) using photographed camera calibration pattern information, on the basis of laser irradiation location information indicating the laser irradiation location determined by the laser irradiation location identifying means (103), and outputs positional relationship information of the laser measuring device (1) with respect to the camera (2), the photographed camera calibration pattern information being obtained by the camera (2) photographing the camera calibration pattern (10) displayed on the display screen (41) of the display (4).

FIG. 3

**Description**

TECHNICAL FIELD

The invention relates to a laser calibration device that calculates a positional relationship between a laser measuring device and a camera, a calibration method for the laser calibration device, and an image input device including the laser calibration device.

BACKGROUND ART

As a method for calculating positional information of a laser measuring device and a camera, Patent Literature 1 shows a method in which using a calibration target, a laser measuring device performs laser scanning on the calibration target to calculate a plane of the calibration target, a camera captures the calibration target to calculate a plane of the calibration target, and results of the respective calculations are checked against known information of the calibration target in geodetic coordinates, by which the mounting positions and mounting angles of the laser measuring device and the camera are calculated.
In addition, to determine a positional relationship between the laser measuring device and the camera, as a method for determining the position and orientation of the laser measuring device, Non-Patent Literature 1 shows a method in which using a target placed on the flat ground, a laser measuring device measures the target with a two-dimensional laser scanner, obtains a plane coordinate value of the target from obtained point cloud data, and parallelly moves and rotates the plane coordinate value from a starting point of measurement and determines the amount of parallel movement and the amount of rotation, by which the position and orientation of the laser measuring device are calculated.
Furthermore, as a method for detecting a calibration error between the laser measuring device and the camera, Patent Literature 2 shows a method in which a laser measuring device forms a calibration pattern which is the same pattern as a pattern for calibration error check on a surface of an object, and a camera equipped with an invisible light transmission filter captures the calibration pattern formed on the surface of the object, by which values representing the relative position and relative posture of the camera to the laser measuring device are calculated as calibration parameters.

CITATION LIST

PATENT LITERATURES

Patent Literature 1: JP 2017-26551 A
Patent Literature 2: JP 2007-64723 A

NON-PATENT LITERATURES

Non-Patent Literature 1: Toru HIRAOKA, "Calibration Method of Laser Scanner by Target Measurement", Photogrammetry and Remote Sensing, 47. 4 (2008): P.P. 53-58

SUMMARY OF INVENTION

TECHNICAL PROBLEM

The methods shown in Patent Literature 1 and Non-Patent Literature 1 need to use a calibration target.
In addition, the method shown in Patent Literature 2 needs to prepare a filter for photographing invisible light.
The invention is made in view of the above-described problems, and an object of the invention is to obtain a laser calibration device capable of calculating a positional relationship between a laser measuring device and a camera by a new calculation method for an irradiation location of laser light from the laser measuring device.

SOLUTION TO PROBLEM

A laser calibration device according to the invention includes: laser calibration pattern displaying means for outputting laser irradiation location identifying pattern information to a display area including a laser irradiation location of laser light emitted from a laser measuring device, the pattern information being for displaying a laser irradiation location identifying pattern, and the laser measuring device emitting laser light and measuring a location of an object using reflected light from the object; laser irradiation location identifying means for receiving reflection intensity value information including reflection intensity values of laser light, and determining the laser irradiation location in the display area on the basis of the reflection intensity values included in the reflection intensity value information, the reflection intensity value information being outputted from the laser measuring device having received the laser light emitted from the laser measuring device and reflected from the laser irradiation location identifying pattern displayed in the display area; camera calibration pattern displaying means for outputting camera calibration pattern information for displaying a camera calibration pattern in the display area; and positional relationship computing means for computing a positional relationship between the laser measuring device and a camera using photographed camera calibration pattern information, on the basis of laser irradiation location information indicating the laser irradiation location determined by the laser irradiation location identifying means, and outputting positional relationship information of the laser measuring device with respect to the camera, the photographed camera calibration pattern information being obtained by the camera photographing the camera calibration pattern displayed in the display area.

ADVANTAGEOUS EFFECTS OF INVENTION

According to the invention, for example, there is an advantageous effect of being able to calculate a positional relationship between the laser measuring device and the camera without using a calibration target and a filter for photographing invisible light, and to automatically perform laser calibration.

BRIEF DESCRIPTION OF DRAWINGS

FIG. 1 is a block diagram showing an exemplary configuration of an image input device including a computing machine 3 including a laser calibration device 100 according to a first embodiment of the invention.
FIG. 2 is a configuration diagram showing exemplary disposition of the image input device shown in FIG. 1.
FIG. 3 is a block diagram showing and functionally showing constituent elements of the laser calibration device 100 according to the first embodiment of the invention.
FIG. 4 is a flowchart showing exemplary operation of the laser calibration device 100 according to the first embodiment of the invention.
FIG. 5 is a diagram showing a state in which a camera calibration pattern 10 is displayed on a display screen 41 of a display 4.
FIG. 6 is a diagram showing a state in which a laser irradiation location identifying pattern 20 is displayed on the display screen 41 of the display 4 at time t10.
FIG. 7 is a diagram showing a state in which the laser irradiation location identifying pattern 20 is displayed on the display screen 41 of the display 4 at time t11.
FIG. 8 is a diagram showing a state in which the laser irradiation location identifying pattern 20 is displayed on the display screen 41 of the display 4 at time t12.
FIG. 9 is a diagram showing a state in which the laser irradiation location identifying pattern 20 is displayed on the display screen 41 of the display 4 at time t13.
FIG. 10 is a diagram showing a state in which the laser irradiation location identifying pattern 20 is displayed on the display screen 41 of the display 4 at time t20.
FIG. 11 is a diagram showing a state in which the laser irradiation location identifying pattern 20 is displayed on the display screen 41 of the display 4 at time t21.
FIG. 12 is a diagram showing a state in which the laser irradiation location identifying pattern 20 is displayed on the display screen 41 of the display 4 at time t22.
FIG. 13 is a diagram showing a state in which the laser irradiation location identifying pattern 20 is displayed on the display screen 41 of the display 4 at time t23.
FIG. 14 is a diagram showing a relationship between the reflection intensity value of laser light from a laser measuring device 1 and the display location of a columnar diagram system.

DESCRIPTION OF EMBODIMENTS

To describe the invention in more detail, a mode for carrying out the invention will be described below with reference to the accompanying drawings.

First Embodiment.

A laser calibration device and an image input device including the laser calibration device according to a first embodiment of the invention will be described on the basis of the drawings.

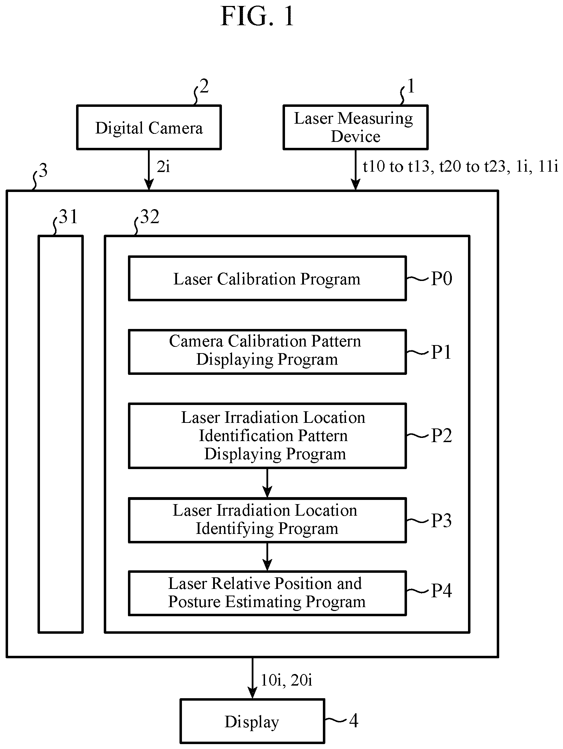

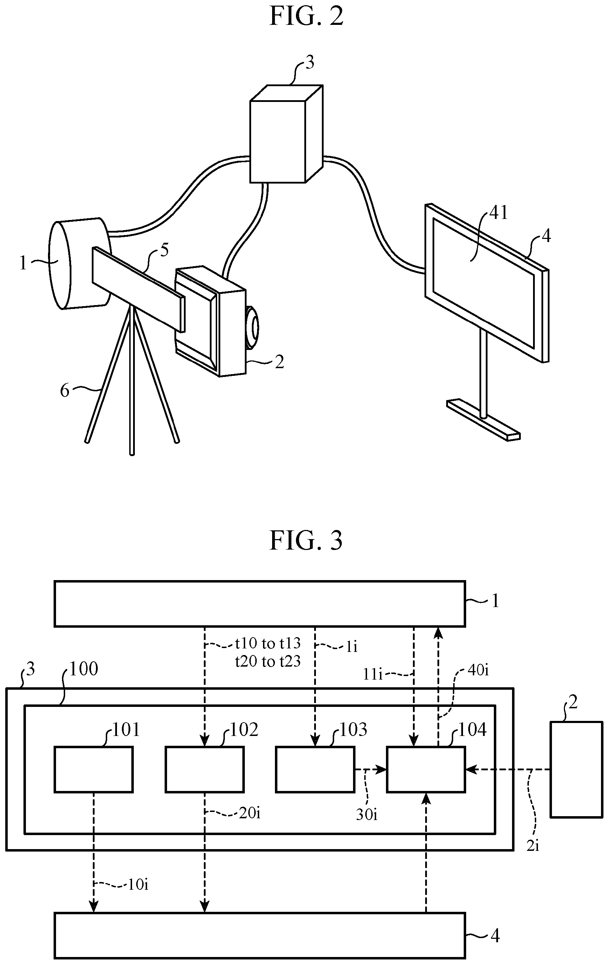

First, the image input device will be described using FIGS. 1 and 2. The image input device mainly includes a laser measuring device 1 which is a calibration target, a digital camera 2 which is a calibration target, and that includes a laser calibration device 100 that can calculate a positional relationship between the laser measuring device 1 and the camera 2, and a computing machine 3 that executes programs that calculate a positional relationship, and a display 4 that displays a calibration pattern rendered by a program stored in the computing machine 3 on a display screen.

The laser measuring device 1 and the camera 2 are fixed together by a fixing tool 5. The fixing tool 5 is mounted and held on a tripod 6.

The laser measuring device 1 emits laser light and receives reflected light which is reflected from an object, to measure the location of the object. When the laser measuring device 1 emits laser light, the laser measuring device 1 simultaneously outputs output values including time data, an irradiation angle, and the like, to the computing machine 3.

The camera 2 captures the object. The focal length, principal point location, and distortion coefficient of the camera 2 are calculated by a generally known calculation method in advance, i.e., before a positional relationship between the laser measuring device 1 and the camera 2 is calculated.

The display 4 displays image information from the camera 2, information about the object from the laser measuring device 1, etc., on the display screen 41. Although in the first embodiment a liquid crystal type display is used as the display 4, in principle, the display 4 does not need to be a liquid crystal type display as long as the display 4 is a display that changes the reflectivity of laser light depending on color displayed.

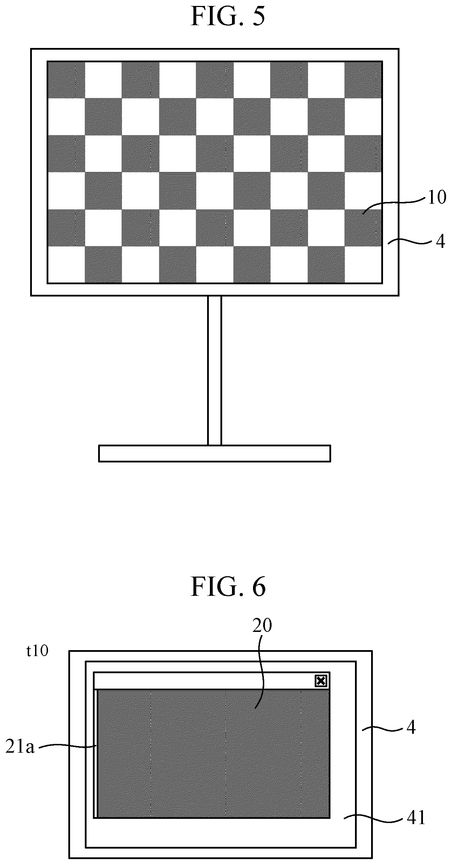

The computing machine 3: 1) outputs laser irradiation location identifying pattern information to the display 4, the pattern information being for displaying, on the display screen 41 of the display 4, a laser irradiation location identifying pattern 20 which is synchronized with time data included in output values from the laser measuring device 1; 2) receives reflection intensity value information including the reflection intensity values of laser light, the reflection intensity value information being outputted from the laser measuring device 1 having received the laser light emitted from the laser measuring device 1 to the display screen 41 of the display 4 and reflected from the laser irradiation location identifying pattern 20 (see FIGS. 6 to 13) displayed on the display screen 41 of the display 4; 3) determines a laser irradiation location on the display screen 41 of the display 4 on the basis of the reflection intensity values included in the reflection intensity value information; 4) outputs camera calibration pattern information for displaying a camera calibration pattern 10 on the display screen 41 of the display 4; and 5) computes a positional relationship between the laser measuring device 1 and the camera 2 using photographed camera calibration pattern information 2i, on the basis of the laser irradiation location, and outputs positional relationship information of the laser measuring device 1 with respect to the camera 2, the photographed camera calibration pattern information 2i being obtained by the camera 2 photographing the camera calibration pattern displayed on the display screen 41 of the display 4.

Although in the first embodiment the laser location identifying pattern 20 is displayed in synchronization with the time data included in the output values from the laser measuring device 1, provided that the output values from the laser measuring device 1 can be associated with the display content of the laser location identifying pattern 20, the laser location identifying pattern 20 does not need to be synchronized with the time data included in the output values from the laser measuring device 1.

Specifically, the computing machine 3 includes a central processing unit (CPU) 31 that performs computation and control; storage means 32 including memories such as a ROM and a RAM; and an interface for input and output (not shown).

As shown in FIG. 1, the storage means 32 stores therein a laser calibration program P0, a camera calibration pattern displaying program P1, a laser irradiation location identification pattern displaying program P2, a laser irradiation location identifying program P3, and a laser relative position and posture estimating program P4. The CPU 31 reads the laser calibration program P0 stored in the storage means 32, reads the programs P1 to P4 on the basis of the laser calibration program P0, and performs computation and control in accordance with the programs P1 to P4.

The camera calibration pattern displaying program P1 is a program for displaying a camera calibration pattern 10 of an arbitrary size on the display screen 41 of the display 4.

A state in which the camera calibration pattern 10 is displayed on the display screen 41 of the display 4 by the camera calibration pattern displaying program P1 is shown in FIG. 5. The camera calibration pattern 10 is a checkered pattern and is a grid pattern in which black and white squares are alternately arranged horizontally and vertically in a grid pattern. The size of the squares in the checkered pattern is specified upon execution of the camera calibration pattern displaying program P1. The camera calibration pattern 10 which is the checkered pattern is a pattern used to compute the position and posture of the camera 2.

The laser irradiation location identification pattern displaying program P2 is a program for displaying, on the display screen 41 of the display 4, the laser irradiation location identifying pattern 20 having white columnar graphics 21 and 22 that move on the screen in synchronization with time data included in output values from the laser measuring device 1.

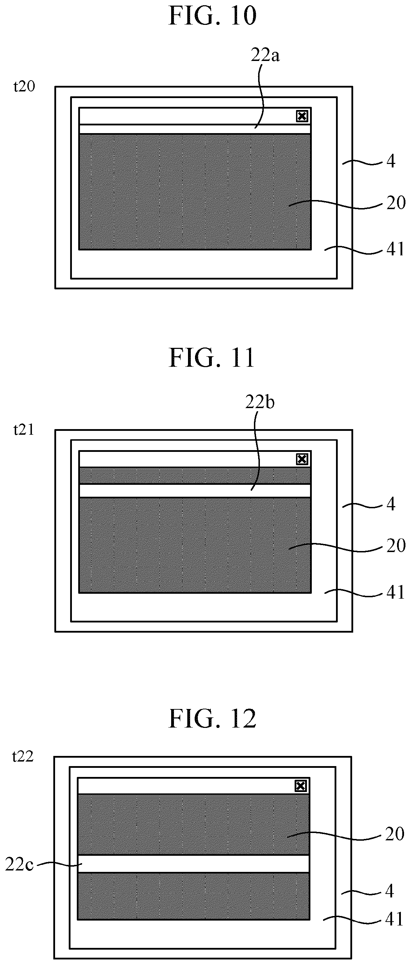

A state in which the laser irradiation location identifying pattern 20 is displayed on the display screen 41 of the display 4 by the laser irradiation location identification pattern displaying program P2 is shown in FIGS. 6 to 9 and 10 to 13. The laser irradiation location identifying pattern 20 has a black background, and white columnar graphics 21 and 22 are displayed so as to move on the black background. FIGS. 6 to 9 show white columnar graphics 21a to 21d that move from a left edge of the screen to a right edge of the screen at time t10 to t13 calculated using time data included in output values from the laser measuring device 1. Display of the columnar graphics 21a to 21d which are displayed at time t10 to t13 is repeated in constant cycles. FIGS. 10 to 13 show white columnar graphics 22a to 22d that move from a top edge of the screen to a bottom edge of the screen at time t20 to t23 calculated using time data included in the output values from the laser measuring device 1. Display of the columnar graphics 22a to 22d which are displayed at time t20 to t23 is repeated in constant cycles.

Note that time t10 is the starting time of the white columnar graphic 21a that moves from the left edge of the screen to the right edge of the screen, time t11 and time t12 are times at which the columnar graphics 21b and 21c are sequentially displayed after time t10, and time t13 is the ending time of the columnar graphic 21d. In addition, although two points of time between time t10 and time t13 are shown for convenience of description, the columnar graphic continuously moves from the left edge of the screen to the right edge of the screen and is repeated in constant cycles. The columnar graphic that continuously moves from the left edge of the screen to the right edge of the screen is described as the columnar graphic 21.

Likewise, time t20 is the starting time of the white columnar graphic 22a that moves from the top edge of the screen to the bottom edge of the screen, time t21 and time t22 are times at which the columnar graphics 22b and 22c are sequentially displayed after a constant cycle, and time t23 is the ending time of the columnar graphic 21d. In addition, although two points of time between time t20 and time t23 are shown for convenience of description, the columnar graphic continuously moves from the top edge of the screen to the bottom edge of the screen and is repeated in constant cycles. The columnar graphic that continuously moves from the top edge of the screen to the bottom edge of the screen is described as the columnar graphic 22.

The laser irradiation location identifying program P3 is a program for identifying an irradiation location of laser light emitted from the laser measuring device 1, using output values from the laser measuring device 1.

The laser measuring device 1 emits laser light to the display screen 41 of the display 4 on which the laser irradiation location identifying pattern 20 having the columnar graphic 21 that periodically changes from the left edge of the screen to the right edge of the screen or having the columnar graphic 22 that periodically changes from the top edge of the screen to the bottom edge of the screen is displayed by the laser irradiation location identification pattern displaying program P2, and a sequence of the reflection intensity values of laser light reflected from the display screen 41 which are obtained by the laser measuring device 1 is added together to calculate a peak time of the sequence, by which a laser irradiation location is identified.

Namely, the laser measuring device 1 having received laser light that is irradiated therefrom onto the white columnar graphic 21 or the columnar graphic 22 which is displayed on the display screen 41 of the display 4, and that is reflected from the white columnar graphic 21 or the columnar graphic 22 outputs the reflection intensity values of the reflected laser light as values different than the reflected intensity values of laser light irradiated onto a black screen which is a background. Although, in the present embodiment, description is made assuming that reflection intensity obtained when white is displayed is larger than reflection intensity obtained when black is displayed, there is also a display having a reverse characteristic. By observing the values of reflection intensities of laser light, the location of the columnar graphic 21 or the columnar graphic 22 on the display screen 41 of the display 4 irradiated with the laser light can be known, and as a result, the irradiation location on the display screen 41 of the display 4 of the laser light from the laser measuring device 1 can be identified. Note, however, that a change in the reflection intensity value on the display is very weak and is susceptible to noise, and thus in the present embodiment, display on the display is periodically changed and a sequence of reflection intensities is added together for each repetition cycle, by which a laser irradiation location is identified.

Specifically, the laser irradiation location identifying program P3 performs the following operation: Namely, of output values from the laser measuring device 1, output values having the same irradiation angle are put together to create a sequence of reflection intensity values. When output values have the same irradiation angle, the output values are measurement values of laser light irradiated to the same location.

For the sequence of reflection intensity values, a reflection intensity sequence for each repetition cycle is added together with reference to the display starting times of the columnar graphic 21 and the columnar graphic 22 in the laser irradiation location identifying pattern 20 that is displayed on the display screen 41 of the display 4 by the laser irradiation location identification pattern displaying program P2 and that periodically changes and is repeated.

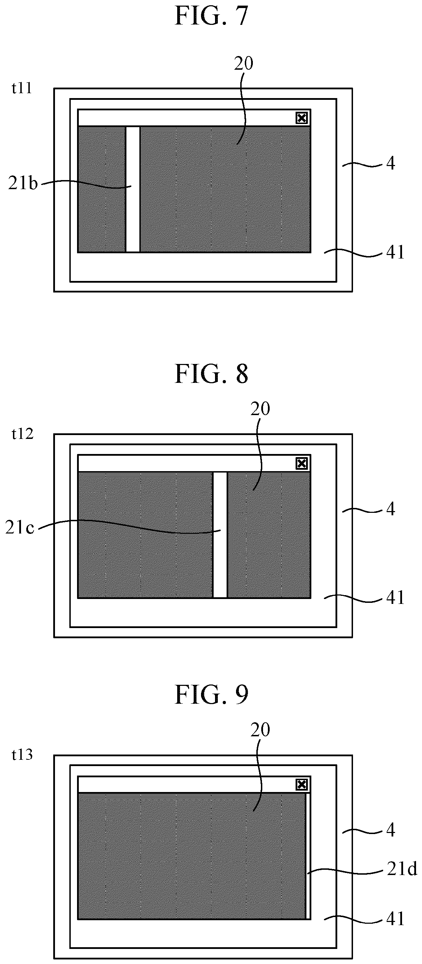

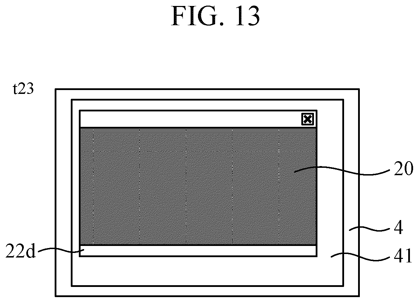

The adding together of the reflection intensity sequence will be described in detail below. When the columnar graphic 21 moves from the left edge of the screen to the right edge of the screen, the display starting time of the columnar graphic 21 is time t10 at which the columnar graphic 21a shown in FIG. 6 appears. In addition, when the columnar graphic 22 moves from the top edge of the screen to the bottom edge of the screen, the display starting time of the columnar graphic 22 is time t20 at which the columnar graphic 22a shown in FIG. 10 appears. The display cycle of the columnar graphic 21 is obtained by subtracting t10 from the display ending time t13 of the columnar graphic 21d shown in FIG. 9. Likewise, the display cycle of the columnar graphic 22 is obtained by subtracting t20 from the display ending time t23 of the columnar graphic 22d shown in FIG. 13.

Hereinafter, the display cycle of the columnar graphic 21 is T21 and the display cycle of the columnar graphic 22 is T22. Since the columnar graphics are periodically displayed, when n is a natural number, the display location of the columnar graphic 21 at time t11 + T21 × n is the same as the display location of the columnar graphic 21 at time t11. This fact holds true for an arbitrary time t1P when t10 ≤ t1P ≤ t13. In addition, for the columnar graphic 22, too, likewise, the above fact holds true for an arbitrary time t2Q when t20 ≤ t2Q ≤ t23.

Hence, when, in a case of irradiating laser light irradiated at an irradiation angle θ1 to the display location of the columnar graphic 21b, a value obtained by adding a reflection intensity value corresponding to the irradiation angle θ1 and time t11 + T21 × n to a reflection intensity value corresponding to the irradiation angle θ1 and time t11 is A, and a value obtained by adding a reflection intensity value corresponding to the irradiation angle θ1 and time t2P + T21 × n to a reflection intensity value corresponding to the irradiation angle θ1 and time t2P is B when time t2P is t2P ≠ t11 and t10 ≤ t2P ≤ t13, A is a larger value than B when the number of addition operations is sufficiently large. This fact holds true for an arbitrary irradiation angle. Therefore, by adding together a reflection intensity sequence for each irradiation angle which is an output value and determining a time at which the maximum sum of reflection intensity values is obtained, a correspondence between the irradiation angle and the display location of the columnar graphic can be obtained.

When the columnar graphic 22 moves from the top edge of the screen to the bottom edge of the screen, as in the above-described case in which the columnar graphic 21 moves from the left edge of the screen to the right edge of the screen, by adding together a reflection intensity sequence for each irradiation angle which is an output value and determining a time at which the maximum sum of reflection intensity values is obtained, a correspondence between the irradiation angle and the display location of the columnar graphic can be obtained.

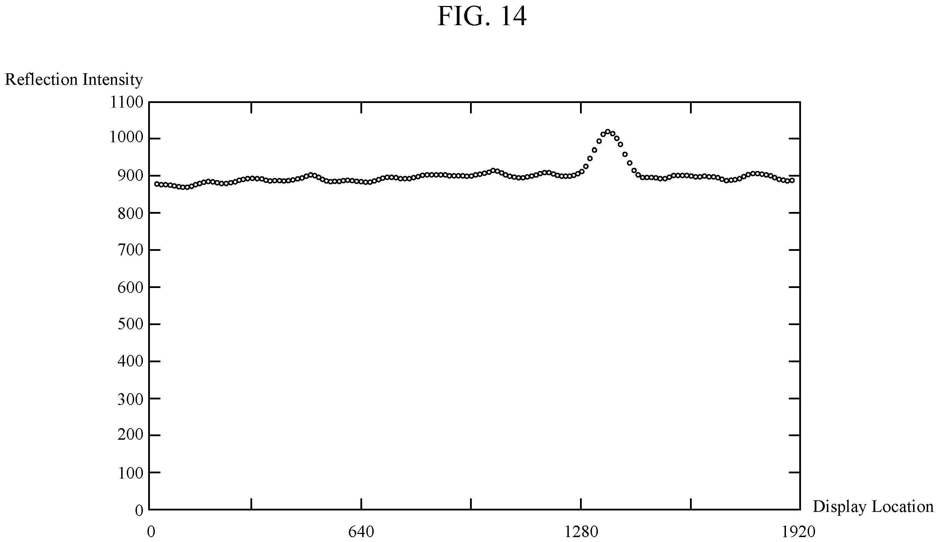

An example of the thus obtained reflection intensity sequence is shown in FIG. 14. FIG. 14 shows a reflection intensity sequence created by putting together output values having an irradiation angle θ among output values from the laser measuring device 1. Here, it is assumed that the irradiation angle θ has a value at which when the laser measuring device 1 irradiates laser light at the irradiation angle θ, the laser light is irradiated to the display location of the columnar graphic 21c. In addition, it is assumed that the resolution of the display is 1920 × 1080, and the x-coordinates of center positions of the columnar graphics 21a, 21b, 21c, and 21d are 0, 640, 1280, and 1920, respectively.

In FIG. 14, a horizontal axis represents the display location of the columnar graphic, a vertical axis represents the reflection intensity value of laser light which is an output value from the laser measuring device 1, and an open circle represents the sum of reflection intensity values determined for a display location of the columnar graphic by computation.

Note that FIG. 14 shows an example of a reflection intensity sequence at a time when the columnar graphic 21 periodically moves from the left edge of the screen to the right edge of the screen on the display screen 41 of the display 4 by the laser irradiation location identification pattern displaying program P2.

Likewise, a reflection intensity sequence at a time when the columnar graphic 22 periodically moves from the top edge of the screen to the bottom edge of the screen on the display screen 41 of the display 4 by the laser irradiation location identification pattern displaying program P2 is obtained.

As can be understood from the above description, the laser irradiation location identifying program P3 is a program for identifying an irradiation location of laser light emitted from the laser measuring device 1 by calculating the display locations of the columnar graphics 21 and 22 which are displayed at a location irradiated with the laser light, by adding together each reflection intensity sequence.

In short, each of the display locations of the columnar graphic 21 that moves from the left edge of the screen to the right edge of the screen and the columnar graphic 22 that moves from the top edge of the screen to the bottom edge of the screen on the display screen 41 of the display 4 is calculated, by which the coordinates of the laser irradiation location on the display screen 41 of the display 4 of laser light emitted from the laser measuring device 1 are identified.

A coordinate system representing the coordinates of the laser irradiation location is a coordinate system for specifying a display location by the program. The coordinates of the laser irradiation location are associated with an output value from the laser measuring device 1. For the coordinates of the laser irradiation location, there are a plurality of output values from the laser measuring device 1 that are used to create a reflection intensity sequence, and thus, one of the output values from the laser measuring device 1 is selected and the selected output value is associated with the coordinates of the laser irradiation location. In addition, instead of selecting one of the output values from the laser measuring device 1, for example, an average value of the output values from the laser measuring device 1 may be calculated and associated with the coordinates of the laser irradiation location.

The laser relative position and posture estimating program P4 is a program for calculating the relative position and relative posture of the laser measuring device 1 to the camera 2, using image data obtained by the camera 2 photographing the camera calibration pattern 10 displayed on the display screen of the display 4 by the camera calibration pattern displaying program P1, the output values from the laser measuring device 1, and the laser irradiation location identified by the laser irradiation location identifying program P3.

Specifically, the laser relative position and posture estimating program P4 performs the following operation: First, the camera calibration pattern 10 displayed on the display screen 41 of the display 4 by the camera calibration pattern displaying program P1 is photographed by the camera 2, and image information 2i of the photographed camera calibration pattern 10 is taken in the computing machine 3.

At the same time, the size of squares in a checkered pattern which is the camera calibration pattern 10 displayed on the display screen 41 is inputted as actual dimensions to the computing machine 3.

The coordinates of the points of intersection of the checkered pattern are extracted from the captured image information 2i by a normally performed method.

The extracted coordinates of the points of intersection of the checkered pattern are calculated as the coordinates of the points of intersection of the checkered pattern in a world coordinate system which is defined with reference to the display screen 41 of the display 4.

Using the calculated coordinates of the points of intersection of the checkered pattern in the world coordinate system, the position and posture of the camera 2 in the world coordinate system are calculated using known points by a generally known method.

On the other hand, the coordinates of the laser irradiation location calculated by the laser irradiation location identifying program P3 are calculated as the coordinates of the laser irradiation location in the world coordinate system, and the coordinates of the laser irradiation location in the world coordinate system are associated with an output value from the laser measuring device 1.

Then, the relative position and relative posture of the laser measuring device 1 to the camera 2 are calculated. At this time, the relative position and relative posture of the laser measuring device 1 to the camera 2 are the position and posture of the laser measuring device 1 in a coordinate system of the camera 2 with reference to the camera 2.

Specifically, in the world coordinate system, observation equations for the laser irradiation location on the display screen 41 of the display 4 of laser light from the laser measuring device 1 are set up, and solutions are found by performing numerical computation using a generally known nonlinear optimization technique, by which the relative position and relative posture of the laser measuring device 1 to the camera 2 are calculated.

Setting up of observation equations will be described below.

In a laser coordinate system with reference to the laser measuring device 1, a laser irradiation location L1 is determined by equation (1).

$$L_l = \mathbf{d} \begin{bmatrix} cos\theta_V \, sin\theta_A \\ cos\theta_V \, cos\theta_A \\ sin\theta_V \end{bmatrix} \qquad (1)$$

At this time, for output values from the laser measuring device 1, the irradiation angle in a horizontal direction is $\theta_A$, the irradiation angle in a vertical direction is $\theta_V$, and the distance to a reflecting object, i.e., the display screen 41 of the display 4, is d.

A laser irradiation location Lc in the camera coordinate system is determined by equation (2).

$$L_C = R_{cl}L_l + \begin{bmatrix} X_{cl} \\ Y_{cl} \\ Z_{cl} \end{bmatrix} \qquad (2)$$

At this time, the coordinates of the laser measuring device 1 in the camera coordinate system are $[X_{cl}, Y_{cl}, Z_{cl}]^T$ and a rotation matrix representing the posture of the laser measuring device 1 in the camera coordinate system is $R_{cl}$.

A laser irradiation location Lw in the world coordinate system is determined by equation (3).

$$L_w = R_{wc}L_c + \begin{bmatrix} X_{wc} \\ Y_{wc} \\ Z_{wc} \end{bmatrix} \qquad (3)$$

At this time, the coordinates of the camera 2 in the world coordinate system are $[X_{wc}, Y_{wc}, Z_{wc}]^T$ and a rotation matrix representing the posture of the camera 2 in the world coordinate system is R$_{wc}$.

The laser irradiation location L$_W$ is determined by equation (4) by substituting equation (2) into equation (3) and further substituting equation (1) thereinto.

$$L_w$$
$$= R_{wc}\left(R_{cl}L_l + \begin{bmatrix} X_{cl} \\ Y_{cl} \\ Z_{cl} \end{bmatrix}\right) + \begin{bmatrix} X_{wc} \\ Y_{wc} \\ Z_{wc} \end{bmatrix}$$
$$= R_{wc}R_{cl}\begin{bmatrix} d\ cos\theta_V\ sin\theta_A \\ d\ cos\theta_V\ cos\theta_A \\ d\ sin\theta_V \end{bmatrix} + R_{wc}\begin{bmatrix} X_{cl} \\ Y_{cl} \\ Z_{cl} \end{bmatrix} + \begin{bmatrix} X_{wc} \\ Y_{wc} \\ Z_{wc} \end{bmatrix} \qquad (4)$$

Equation (4) can be transformed into equation (5), and the position and posture of the laser measuring device 1 can be determined by equation (5). By the found solution, the relative position and relative posture of the laser measuring device 1 to the camera 2 are determined.

$$R_{wc}\ R_{cl}\begin{bmatrix} d\ cos\theta_V\ sin\theta_A \\ d\ cos\theta_V\ cos\theta_A \\ d\ sin\theta_V \end{bmatrix} + R_{wc}\begin{bmatrix} X_{cl} \\ Y_{cl} \\ Z_{cl} \end{bmatrix} + \begin{bmatrix} X_{wc} \\ Y_{wc} \\ Z_{wc} \end{bmatrix} - L_w\ =\ 0 \qquad (5)$$

The programs P1 to P4 stored in the storage means 32 have been mainly described, and components of the laser calibration device 100 will be described below.

The laser calibration device 100 is composed of the CPU 31 and the programs P1 to P4 stored in the storage means 32, and includes components shown in FIG. 3.

Namely, camera calibration pattern displaying means 101 includes the CPU 31 and the camera calibration pattern displaying program P1 stored in the storage means 32. The size of squares in the camera calibration pattern stored in the storage means 32 is specified and camera calibration pattern information 10i is outputted to the display 4.

Laser calibration pattern displaying means 102 includes the CPU 31 and the laser irradiation location identification pattern displaying program P2 stored in the storage means 32. In order to display the laser irradiation location identifying pattern 20 on the display screen 41 of the display 4, which is the irradiation location of laser light emitted from the laser measuring device 1, in synchronization with time data included in output values from the laser measuring device 1, laser irradiation location identifying pattern information 20i is outputted to the display 4.

The laser irradiation location identifying pattern 20 includes a pattern in which movement of the white columnar graphic 21 from the left edge of the screen to the right edge of the screen on a black background is periodically repeated, and a pattern in which movement of the white columnar graphic 22 from the top edge of the screen to the bottom edge of the screen is periodically repeated.

Laser irradiation location identifying means 103 includes the CPU 31 and the laser irradiation location identifying program P3 stored in the storage means 32. Laser light emitted from the laser measuring device 1 is reflected from the display screen 41 of the display 4 which is the irradiation location of the laser light, and the reflected laser light is received by the laser measuring device 1, by which reflection intensity value information 1i including the reflection intensity values of the reflected laser light which is outputted from the laser measuring device 1 is obtained. An irradiation location of the laser light on the display screen 41 of the display 4 is computed on the basis of the obtained reflection intensity value information 1i to identify a laser irradiation location, by which laser irradiation location information 30i is obtained.

The laser irradiation location identifying pattern 20 outputted from the laser calibration pattern displaying means 102 is displayed on the display screen 41 of the display 4, and as shown in FIGS. 6 to 9 and 10 to 13, in the laser irradiation location identifying pattern 20, the columnar graphic 21 or the columnar graphic 22 moves in synchronization with time data included in the output values that emit laser light from the laser measuring device 1, and is periodically repeated. Since the laser measuring device 1 receives laser light that is emitted therefrom to the laser irradiation location identifying pattern 20 in which the columnar graphic 21 or the columnar graphic 22 moves and periodically changes, and that is reflected from the laser irradiation location identifying pattern 20, the reflection intensity value of laser light irradiated onto and reflected from the white columnar graphic 21 or the columnar graphic 22 differs from the reflection intensity value of laser light irradiated onto and reflected from the black background.

Therefore, the laser irradiation location identifying means 103 can identify a laser irradiation location by adding together a sequence of inputted reflection intensity values of reflected laser light to calculate a peak time of the sequence.

When laser light from the laser measuring device 1 is irradiated onto the laser irradiation location identifying pattern 20 in which the columnar graphic 21 moves in a left-right direction on the display screen 41 of the display 4, the laser irradiation location identifying means 103 identifies a laser irradiation location in the left-right direction, and when laser light from the laser measuring device 1 is irradiated onto the laser irradiation location identifying pattern 20 in which the columnar graphic 21 moves in an up-down direction, the laser irradiation location identifying means 103 identifies a laser irradiation location in the up-down direction. As a result, a laser irradiation location on the display screen 41 of the display 4 is identified.

Positional relationship computing means 104 includes the CPU 31 and the laser relative position and posture estimating program P4 stored in the storage means 32. A positional relationship between the laser measuring device 1 and the camera 2 is computed using the laser irradiation location information 30i identified by the laser irradiation location identifying means 103, by which the positional relationship between the laser measuring device 1 and the camera 2 is determined. The determined positional relationship is outputted as positional relationship information 40i to the laser measuring device 1, and the laser measuring device 1 calibrates its position and posture.

Specifically, the relative position and relative posture of the laser measuring device 1 to the camera 2 are computed using image information 2i obtained by the camera 2 photographing the camera calibration pattern 10 which is displayed on the display screen of the display 4 by the camera calibration pattern displaying means 101, irradiation angle information 11i of emitted laser light which is included in the output values from the laser measuring device 1, the laser irradiation location information 40i on the display screen 41 of the display 4 which is obtained by the laser irradiation location identifying means 103, and a distance d from the laser measuring device 1 to the display screen 41 of the display 4, by which a positional relationship between the laser measuring device 1 and the camera 2 is determined and outputted as positional relationship information 40i to the laser measuring device 1.

Next, operation to be performed by the thus configured laser calibration device 100 to determine a positional relationship between the laser measuring device 1 and the camera 2 will be described.

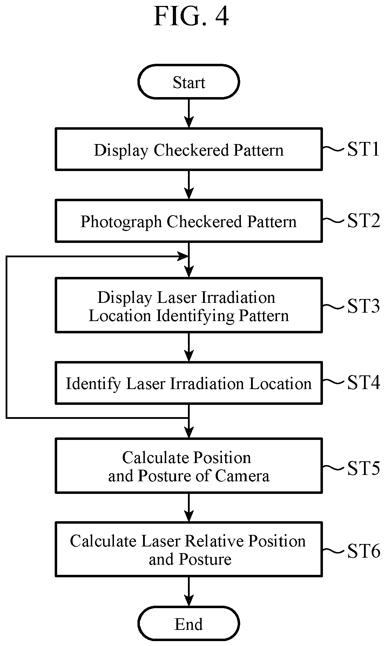

First, the CPU 31 reads the laser calibration program P0 stored in the storage means 32. The laser calibration program P0 is a program that performs a flowchart shown in FIG. 4.

Therefore, the operation will be described with reference to the flowchart shown in FIG. 4.

The CPU 31 displays a checkered pattern in accordance with step ST1. The camera calibration pattern displaying program P1 stored in the storage means 32 is read and executed. That is, the camera calibration pattern displaying means 101 reads the camera calibration pattern 10 stored in the storage means 32, and outputs camera calibration pattern information 10i to the display 4. As a result, the checkered pattern 10 is displayed on the display screen 41 of the display 4.

Then, in accordance with step ST2, the camera 2 photographs the displayed checkered pattern 10. An image photographed by the camera 2 is inputted as image information 2i to the computing machine 3. The image information 2i is provided to the positional relationship computing means 104.

In addition, the size of squares in the checkered pattern which is the camera calibration pattern 10 displayed on the display screen 41 is inputted as actual dimensions to the computing machine 3.

In accordance with step ST3, the CPU 31 displays the laser irradiation location identifying pattern. The laser irradiation location identification pattern displaying program P2 stored in the storage means 32 is read and executed. That is, in order for the computing machine 3 to receive time data t included in output values from the laser measuring device 1 and display the laser irradiation location identifying pattern 20 that is synchronized with the time data t, laser irradiation location identifying pattern information 20i is outputted to the display 4. Specifically, the laser calibration pattern displaying means 102 included in the computing machine 3 first outputs the laser irradiation location identifying pattern information 20i to the display 4, the laser irradiation location identifying pattern information 20i being for repeatedly displaying the laser irradiation location identifying pattern 20 having the columnar graphic 21 that moves from the left side of the screen to the right side of the screen in synchronization with the time data t, on the display screen 41 of the display 4 in constant cycles.

In accordance with step ST4, the CPU 31 identifies a laser irradiation location. The laser irradiation location identifying program P3 stored in the storage means 32 is read and executed. That is, the computing machine 3 receives the time data t and reflection intensity value information 1i including reflection intensity values of reflected laser light which is outputted from the laser measuring device 1 having received the laser light emitted therefrom and reflected from the display screen 41 of the display 4, the time data t and the reflection intensity value information 1i being included in the output values from the laser measuring device 1, and identifies a laser irradiation location of the laser light in the left-right direction on the display screen 41 of the display 4 on the basis of the reflection intensity value information 1i, and thereby obtains laser irradiation location information 30i. Specifically, the laser irradiation location identifying means 103 included in the computing machine 3 identifies a laser irradiation location in the left-right direction by determining a display location of the columnar graphic 21 on the display screen 41 of the display 4 by calculating a peak time of the reflection intensity values on the basis of the reflection intensity value information 1i.

When the identification of the laser irradiation location of the laser light in the left-right direction on the display screen 41 of the display 4 is completed, processing returns to step ST3, and the laser irradiation location identifying pattern information 20i is outputted to the display 4, the laser irradiation location identifying pattern information 20i being for repeatedly displaying the laser irradiation location identifying pattern 20 having the columnar graphic 22 that moves from the top side of the screen to the bottom side of the screen in synchronization with the time data t, on the display screen 41 of the display 4 in constant cycles. At step ST4, in the same manner as for the left-right direction, a display location of the columnar graphic 22 on the display screen 41 of the display 4 is determined, by which a laser irradiation location in the up-down direction is identified.

When the identification of the laser irradiation locations in the left-right direction and the up-down direction is completed by determining the display location of the columnar graphic 22 on the display screen 41 of the display 4, and the coordinates of the laser irradiation location are obtained, processing proceeds to step ST5.

At step ST5, the position and posture of the camera 2 are calculated. In accordance with step ST5, the CPU 31 reads and executes the laser relative position and posture estimating program P4 stored in the storage means 32. That is, the computing machine 3 calculates the position and posture of the camera 2 using the image information 2i photographed by the camera 2 and dimension information indicating the size of the squares in the checkered pattern on the display screen 41 of the display 4 which are obtained at step ST2. Specifically, the positional relationship computing means 104 calculates the coordinates of the points of intersection of the checkered pattern using the image information 2i and the dimension information, and calculates the position and posture of the camera 2 using known points on the basis of results of the calculation of the coordinates of the points of intersection, and thereby obtains a coordinate system of the camera 2.

Then, in accordance with step ST6, the CPU 31 calculates a laser relative position and posture. A positional relationship between the laser measuring device 1 and the camera 2 is computed using the laser irradiation location information 30i obtained at step ST3 and ST4, by which the positional relationship between the laser measuring device 1 and the camera 2 is determined. The determined positional relationship is outputted as positional relationship information 40i to the laser measuring device 1, and the laser measuring device 1 calibrates its position and posture. Specifically, the positional relationship computing means 104 first determines, using the coordinate system of the camera 2 obtained at step ST5, the coordinates of the laser irradiation location indicated by the laser irradiation location information 30i in the coordinate system of the camera 2, and then determines the coordinates of the laser irradiation location in the world coordinate system. From results of the determined coordinates, the relative position and relative posture of the laser measuring device 1 to the camera 2 can be calculated. The positional relationship information 40i based on the calculation results is outputted to the laser measuring device 1.

In the laser calibration device 100 configured in the above-described manner, the laser irradiation location identifying pattern 20 having the columnar graphic 21 and the columnar graphic 22 that move in synchronization with time data which is included in output values from the laser measuring device 1 is repeatedly displayed on the display screen 41 of the display 4 in constant cycles, and the laser irradiation location on the display screen 41 of the display 4 of laser light from the laser measuring device 1 is determined using the reflection intensity values of the laser light irradiated onto the laser irradiation location identifying pattern 20 from the laser measuring device 1 and reflected from the laser irradiation location identifying pattern 20, and thus, there is an advantageous effect of being able to automatically perform laser calibration on a positional relationship between the laser measuring device and the camera 2, without using a calibration target and a filter for photographing invisible light to calculate a laser irradiation location.

Note that although in the above-described first embodiment the laser irradiation location identifying pattern 20 is displayed on the display screen 41 of the display 4, a laser irradiation location is determined on the basis of the reflection intensity values of laser light irradiated onto and reflected from the laser irradiation location identifying pattern 20, and thus, the laser irradiation location identifying pattern 20 does not need to be displayed on the display 4.

Note that in the present invention, modifications to any component of the embodiment or omissions of any component of the embodiment are possible within the scope of the invention.

INDUSTRIAL APPLICABILITY

The present invention provides a laser calibration device that can automatically calculate the relative position and relative posture of a laser measuring device to a camera, and thus, can be used in various manners as an image input device including the laser measuring device 1, the camera 2, and the laser calibration device of the present invention.

REFERENCE SIGNS LIST

1:　　laser measuring device,

2:　　　camera,
3:　　　computing machine,

**31:** CPU,
**32:** storage means,
**4:** display,
**41:** display screen,
**10:** camera calibration pattern,
**20:** laser irradiation location identifying pattern,
**100:** laser calibration device,
**101:** camera calibration pattern displaying means,
**102:** laser calibration pattern displaying means,
**103:** laser irradiation location identifying means, and
**104:** positional relationship computing means

**Claims**

**1.** A laser calibration device comprising:

laser calibration pattern displaying means for outputting laser irradiation location identifying pattern information to a display area including a laser irradiation location of laser light emitted from a laser measuring device, the pattern information being for displaying a laser irradiation location identifying pattern, and the laser measuring device emitting laser light and measuring a location of an object using reflected light from the object;
laser irradiation location identifying means for receiving reflection intensity value information including reflection intensity values of laser light, and determining the laser irradiation location in the display area on a basis of the reflection intensity values included in the reflection intensity value information, the reflection intensity value information being outputted from the laser measuring device having received the laser light emitted from the laser measuring device and reflected from the laser irradiation location identifying pattern displayed in the display area;
camera calibration pattern displaying means for outputting camera calibration pattern information for displaying a camera calibration pattern in the display area; and
positional relationship computing means for computing a positional relationship between the laser measuring device and a camera using photographed camera calibration pattern information, on a basis of laser irradiation location information indicating the laser irradiation location determined by the laser irradiation location identifying means, and outputting positional relationship information of the laser measuring device with respect to the camera, the photographed camera calibration pattern information being obtained by the camera photographing the camera calibration pattern displayed in the display area.

**2.** The laser calibration device according to claim 1, wherein
the display area is a display screen of a display,
the laser measuring device irradiates laser light onto the display screen of the display,
the laser calibration pattern displaying means outputs the laser irradiation location identifying pattern information to the display, and
the camera calibration pattern displaying means outputs the camera calibration pattern information to the display.

**3.** The laser calibration device according to claim 2, wherein
the laser irradiation location identifying pattern includes a moving graphic, and the graphic is periodically repeated, and
the laser irradiation location identifying means identifies a laser irradiation location on the display screen of the display by adding up a sequence of reflection intensity values included in the reflection intensity value information to calculate a peak of the sequence, the reflection intensity value information being outputted from the laser measuring device having received laser light reflected from the laser irradiation location identifying pattern.

**4.** A laser calibration method comprising the steps of:

displaying a camera calibration pattern on a display screen of a display;
displaying a laser irradiation location identifying pattern display on the display screen of the display;
identifying a laser irradiation location on the display screen of the display of laser light emitted from a laser measuring device, on a basis of reflection intensity values of reflected laser light, the reflection intensity values being outputted from the laser measuring device having received the laser light emitted from the laser measuring device and reflected from the display screen of the display; and

identifying a positional relationship of the laser measuring device with respect to a camera using image information outputted from the camera, on a basis of the identified laser irradiation location of the laser light, the image information being obtained by photographing the camera calibration pattern.

5. An image input device comprising:

a laser measuring device for emitting laser light and measuring a location of an object using reflected light from the object;

a camera fixed to the laser measuring device by a fixing tool;

a display having a display screen; and

a computing machine for outputting, to the display, laser irradiation location identifying pattern information for displaying a laser irradiation location identifying pattern on the display screen of the display; receiving reflection intensity value information including reflection intensity values of laser light, and determining a laser irradiation location on the display screen of the display on a basis of the reflection intensity values included in the reflection intensity value information, the reflection intensity value information being outputted from the laser measuring device having received the laser light emitted from the laser measuring device to the display screen of the display and reflected from the laser irradiation location identifying pattern displayed on the display screen of the display; outputting camera calibration pattern information for displaying a camera calibration pattern on the display screen of the display; and computing a positional relationship between the laser measuring device and the camera using photographed camera calibration pattern information, on a basis of the laser irradiation location, and outputting positional relationship information of the laser measuring device with respect to the camera, the photographed camera calibration pattern information being obtained by the camera photographing the camera calibration pattern displayed on the display screen of the display.

# FIG. 1

Digital Camera — 2

Laser Measuring Device — 1

3

31

32

Laser Calibration Program — P0

Camera Calibration Pattern Displaying Program — P1

Laser Irradiation Location Identification Pattern Displaying Program — P2

Laser Irradiation Location Identifying Program — P3

Laser Relative Position and Posture Estimating Program — P4

2i

t10 to t13, t20 to t23, 1i, 11i

10i, 20i

Display — 4

## FIG. 2

## FIG. 3

# FIG. 4

```
           ┌─────────┐
           │  Start  │
           └─────────┘
                │
                ▼
    ┌───────────────────────────┐
    │  Display Checkered Pattern │──ST1
    └───────────────────────────┘
                │
                ▼
    ┌───────────────────────────┐
    │ Photograph Checkered Pattern│──ST2
    └───────────────────────────┘
                │
                ▼
    ┌───────────────────────────┐
    │    Display Laser Irradiation │──ST3
    │ Location Identifying Pattern │
    └───────────────────────────┘
                │
                ▼
    ┌───────────────────────────┐
    │Identify Laser Irradiation Location│──ST4
    └───────────────────────────┘
                │
                ▼
    ┌───────────────────────────┐
    │      Calculate Position    │──ST5
    │    and Posture of Camera   │
    └───────────────────────────┘
                │
                ▼
    ┌───────────────────────────┐
    │ Calculate Laser Relative Position │──ST6
    │         and Posture        │
    └───────────────────────────┘
                │
                ▼
           ┌─────────┐
           │   End   │
           └─────────┘
```

## FIG. 5

## FIG. 6

## FIG. 7

## FIG. 8

## FIG. 9

## FIG. 10

t20

22a

4

20

41

## FIG. 11

t21

22b

4

20

41

## FIG. 12

t22

20

22c

4

41

FIG. 13

# FIG. 14

Reflection Intensity

EP 3 779 504 A1

## INTERNATIONAL SEARCH REPORT

| International application No. |
| --- |
| PCT/JP2019/013295 |

### A. CLASSIFICATION OF SUBJECT MATTER
Int. Cl. G01S7/497(2006.01)i, G01B11/00(2006.01)i

According to International Patent Classification (IPC) or to both national classification and IPC

### B. FIELDS SEARCHED

Minimum documentation searched (classification system followed by classification symbols)
Int. Cl. G01S7/48-7/51, 17/00-17/95, G01B11/00-11/30, G06T7/00-7/90, G01C3/00-3/32

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2007-171092 A (ISHIKAWAJIMA-HARIMA HEAVY INDUSTRIES CO., LTD.) 05 July 2007, entire text, all drawings (Family: none) | 1-5 |
| A | JP 2007-64723 A (HITACHI, LTD.) 15 March 2007, entire text, all drawings & US 2007/0047940 A1 | 1-5 |
| A | JP 2009-264898 A (NISSAN MOTOR CO., LTD.) 12 November 2009, entire text, all drawings (Family: none) | 1-5 |
| A | JP 2005-77385 A (HITACHI PLANT ENGINEERING & CONSTRUCTION CO., LTD.) 24 March 2005, entire text, all drawings (Family: none) | 1-5 |

☒ Further documents are listed in the continuation of Box C.      ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.05.2019 | 28.05.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/013295 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2013-15413 A (TOSHIBA TRANSPORT ENGINEERING, INC.) 24 January 2013, entire text, all drawings (Family: none) | 1-5 |

Form PCT/ISA/210 (continuation of second sheet) (January 2015)

## REFERENCES CITED IN THE DESCRIPTION

**Patent documents cited in the description**

- JP 2017026551 A

- JP 2007064723 A

**Non-patent literature cited in the description**

- **TORU HIRAOKA.** Calibration Method of Laser Scanner by Target Measurement. *Photogrammetry and Remote Sensing,* 2008, vol. 47 (4), 53-58